# EUROPEAN PATENT SPECIFICATION

(11) **EP 2 385 652 B1**
(45) Date of publication and mention of the grant of the patent: **22.01.2014**
(21) Application number: 11003748.8
(22) Date of filing: 06.05.2011
(51) Int. Cl.: H04L 5/00

(54) **Method of enhancing uplink transmission and related communication device**
Verfahren zur Verbesserung der Uplink-Übertragung und zugehörige Kommunikationsvorrichtung
Procédé d'amélioration de transmission de liaison montante et dispositif de communication associé

(30) Priority: 06.05.2010 US 332184 P
(43) Date of publication of application: 09.11.2011
(73) Proprietor: HTC Corporation, Taoyuan County 330 (TW)
(72) Inventor: Jen, Yu-Chih, Taoyuan City Taoyuan County 330 (TW)
(74) Representative: Klang, Alexander H.

(56) References cited:
- WO-A1-2009/039447
- WO-A2-2008/094014
- US-A1- 2009 116 599

## Description

### Background of the Invention

### 1. Field of the Invention

The application relates to a method and a related communication device used in a wireless communication system and related communication device, and more particularly, to a method of enhancing uplink transmission and a related communication device in a wireless communication system.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as to user equipments (UEs).

A long term evolution-advanced (LTE-A) system, as its name implies, is an evolution of the LTE system, considering relaying for cost-effective throughput enhancement and coverage extension. For example, a relay can be deployed at the cell edge where the eNB is unable to provide required radio quality/throughput for the UEs or at certain location where radio signals of the eNB cannot cover. The LTE-A system can support a wider bandwidth up to 100 MHz to satisfy requirement for peak data rate. Coordinated multi-point (CoMP) transmission/reception is considered for the LTE-A as a tool to improve the coverage of high data rates, the cell-edge throughput and/or to increase system throughput. The main idea of the CoMP transmission/reception is as follows: when a UE is in the cell-edge region, it may be able to receive signals from multiple cell sites and the transmission of the UE may be received at multiple cell sites regardless of the system load. Given that, if the signaling transmitted from the multiple cell sites is coordinated, the DL performance can be increased significantly. This coordination can be simple as in the techniques that focus on interference avoidance or more complex as in the case where the same data is transmitted from multiple cell sites. For the UL, since the signal can be received by multiple cell sites, if the scheduling is coordinated from the different cell sites, the system can take advantage of this multiple reception to significantly improve the link performance.

In general, reference signals can be embedded into transmitted signals. The reference signals are multiplexed with the data symbols (which are unknown at the receiver) either in frequency, time or code domain. The uplink reference signals in LTE are mostly based on Zadoff-Chu (ZC) sequences. Theses sequences satisfy the desirable properties for reference signals, exhibiting 0dB, ideal cyclic autocorrelation, and optimal cross-correlation. In order for a cell to support uplink transmissions of different bandwidths, it is necessary to assign a cell at least one base reference signal (RS) sequence for each possible resource block size.

Sequence hopping and/or sequence group hopping of reference signal sequence(s) may not be sufficient in HetNet deployment to mitigate intra-cell/inter-cell interference. For, there might be more than 30 cells having the same hopping pattern while their base sequence and cyclic time shift are not under control of Macro cell (s) or network planning. In addition, the sequence hopping/shift patterns are decided every radio frame and/or by cell ID and/or broadcast signaling of sequence offset for RS on PUSCH.

The roles of the uplink reference signals include enabling channel estimation to aid coherent demodulation, channel quality estimation for uplink scheduling, power control, timing estimation an direction-of-arrival estimation to support downlink beamforming. Two types of reference signal are supported on uplink: demodulation reference signal (DM RS) and sounding reference signal (SRS).

The SRS are primarily used for channel quality estimation to enable frequency-selective scheduling on the uplink. In order to support frequency-selective scheduling between multiple UEs, it is necessary that SRS from different UEs with different sounding bandwidths can overlap. In order to support this, Interleaved FDMA (IFDMA, introduced in Section 15.2) is used in the SRS SCFDMA symbol, with a RePetition Factor (RPF) of 2. In addition, more flexibility should be provided for the bandwidth allocation between UEs. However, in HetNet deployment, such flexibility becomes important to randomize possible interference since scheduling coordination among cells in HetNet is relatively difficult.

WO 2009/039447 A1 discloses that interference which occurs during wireless communication may be managed through the use of fractional reuse and other techniques. In some aspects fractional reuse may relate to HARQ interlaces, portions of a timeslot, frequency spectrum, and spreading codes. Interference may be managed through the use of a transmit power profile and/or an attenuation profile. Interference also may be managed through the use of power management-related techniques.

US 2009/116599 A1 discloses a technique for operating a wireless communication device including assigning a reference signal bandwidth to a reference signal. Cyclic shift control bits (associated with the reference signal) are then allocated based on the assigned reference signal bandwidth. The allocated cyclic shift control bits specify a cyclic shift associated with the reference signal.

WO 2008/094014 A2 discloses a method for generating reference signal sequence using grouping. In this method, base sequences are grouped such that each group contains at least one base sequence of each length, so UE(s) can use various length sequences as a reference signal. And in this method, inter cell interference caused by using various length sequence as a reference signal sequence can be minimized by grouping sequences having the high cross correlation relation.

### Summary of the Invention

A method of enhancing uplink transmission in a wireless communication system is provided.

A method of enhancing uplink transmission or signaling for a mobile device in a wireless communication system is provided in claim 1.

A method of enhancing uplink transmission for a network in a wireless communication system is provided as set forth in claim 5.

A communication device of enhancing uplink transmission for a network in a wireless communication system is provided as set forth in claim 8.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of an exemplary wireless communication system.

FIG.2 is a schematic diagram of an exemplary communication device.

FIG.3 illustrates the program code in FIG.2.

FIG.4 is a flow chart of an exemplary process.

FIG.5 is a flow chart of an exemplary process.

FIG.6 is a flow chart of an exemplary process.

### Detailed Description

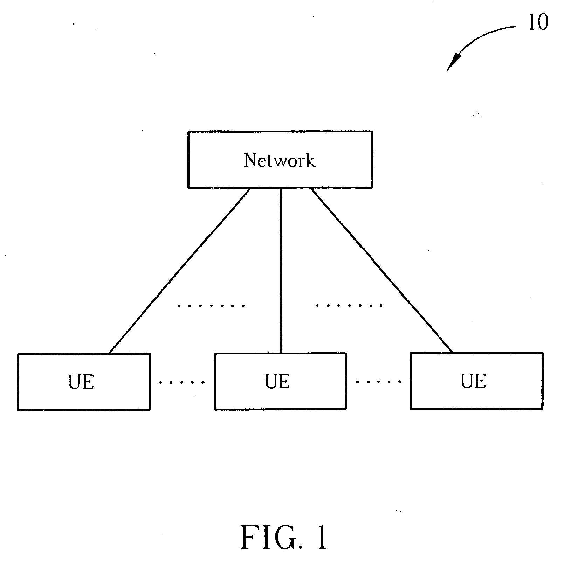

Please refer to FIG. 1. FIG. 1 is a schematic diagram of an exemplary wireless communication system 10. The wireless communication system 10 can be an LTE-Advanced system, or other mobile communication systems (e.g. LTE, WCDMA, HSPA, GSM, EDGE, etc.). The wireless communication system 10 is briefly composed of a network and a plurality of user equipments (UEs), as the structure illustrated in FIG.1. In the LTE-Advanced system, the network is referred as an evolved universal terrestrial radio access network (E-UTRAN) comprising a plurality of evolved base stations (eNBs) . The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

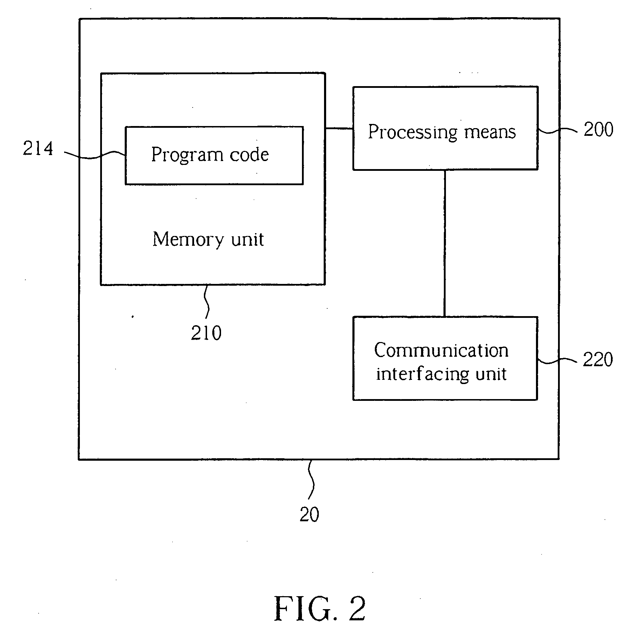

Please refer to FIG.2. FIG.2 is a schematic diagram of an exemplary communication device 20. The communication device 20 can be the UE or the network shown in FIG.1 and may include a processing means 200 such as a microprocessor or ASIC, a memory unit 210, and a communication interfacing unit 220. The memory unit 210 may be any data storage device that can store program code 214 for access by the processing means 200. Examples of the memory unit 210 include but are not limited to a subscriber identity module (SIM), read-only memory (ROM), random-access memory (RAM), CD-ROMs, magnetic tapes, floppy disks, and optical data storage devices. The communication interfacing unit 220 is preferably a radio transceiver for wirelessly communicating with the network according to processing results of the processing means 200.

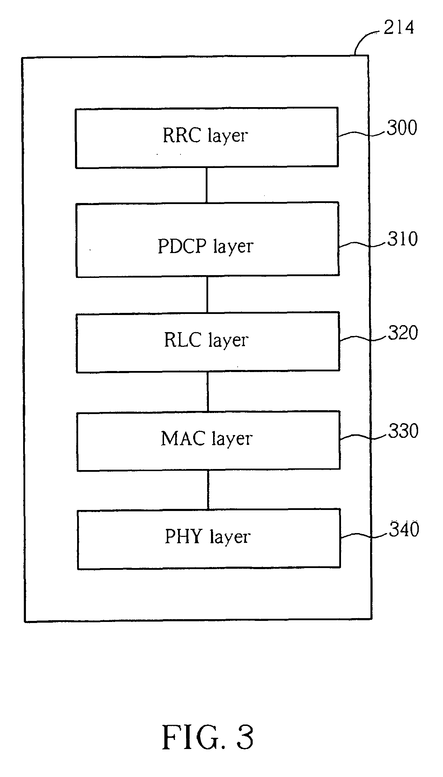

Please refer to FIG.3, which illustrates the program code 214 in FIG.2. The program code 214 includes program code of multiple communications protocol layers, which from top to bottom are a radio resource control (RRC) layer 300, a packet data convergence protocol (PDCP) layer 310, a radio link control (RLC) layer 320, a medium access control (MAC) layer 330 and a physical (PHY) layer 340. The PHY layer 340 includes physical channels, such as Physical Random Access Channel (PRACH), Physical Uplink Control Channel (PUCCH), Physical Uplink Shared Channel (PUCCH), Physical Downlink Control Channel (PDCCH), Physical Downlink Shared Channel (PDCCH).

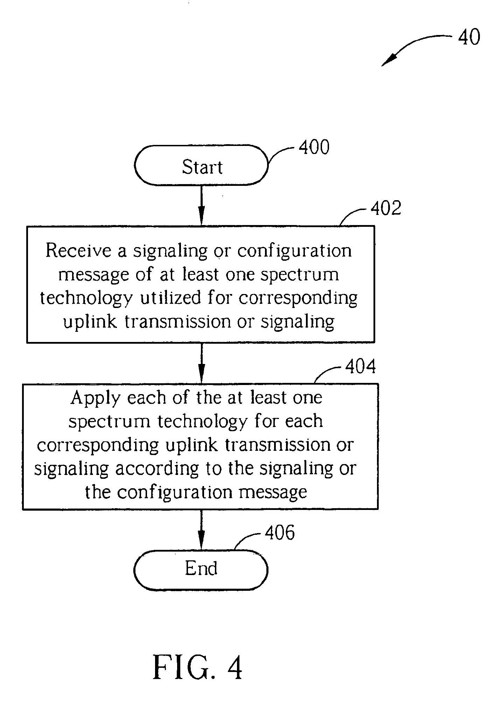

Please refer to FIG.4, which is a flow chart of an exemplary process 40. The process 40 is used for enhancing uplink transmission for a UE in a wireless communication system. The wireless communication system could be the wireless communication system 10. The process 40 can be compiled into the program code 214 and includes the following steps:

Step 400: Start.

Step 402: Receive a signaling or configuration message of at least one spectrum technology utilized for corresponding uplink transmission or signaling.

Step 404: Apply each of the at least one spectrum technology for each corresponding uplink transmission or signaling according to the signaling or the configuration message.

Step 406: End.

According to the process 40, the UE receives the signaling or configuration message of at least one spectrum technology utilized for corresponding uplink transmission or signaling from a network. Preferably, the signaling may be referred as to a cell broadcast signaling and/or a UE dedicated signaling. The UE applies each of the at least one spectrum technology for each corresponding uplink transmission or signaling according to the signaling or the configuration message.

The one or more spread spectrum technologies may be referred as to at least one of a sequence hopping, sequence group hopping/shifting, cyclic time shift hopping/remapping and orthogonal cover code. In other words, the UE can be configured with sequence hopping, sequence group hopping/shifting, cyclic time shift hopping/remapping and/or orthogonal cover code by cell broadcasting signaling and/or UE dedicated signaling (e.g. assume cell ID is known) for the uplink transmission. The hopping/shifting patterns corresponding to sequence group hopping is preferably generated by a pseudo random sequence generator and used by the UE. The number of the hopping/shifting patterns is greater than seventeen. Compared to the prior art, more hopping/shift patterns are available.

In addition, the uplink transmission may be referred as to PUSCH transmission, PUCCH transmission or reference signal transmission.

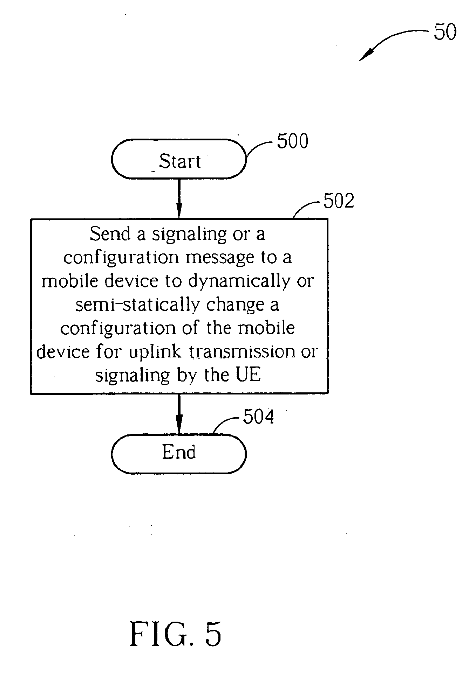

Please refer to FIG.5, which is a flow chart of an exemplary process 50. The process 50 is used for enhancing downlink transmission for a network in a wireless communication system. The wireless communication system could be the wireless communication system 10. The process 50 can be compiled into the program code 214 and includes the following steps:

Step 500: Start.

Step 502: Send a signaling or a configuration message to a UE to dynamically or semi-statically change a configuration of the mobile device for uplink transmission or signaling by the UE.

Step 504: End.

According to the process 50, the network sends a signaling or a configuration message to the UE to dynamically or semi-statically change a configuration of the UE for uplink transmission or signaling by the UE. The signaling may be referred as to a RRC signaling or PDCCH signaling. The configuration may includes configurations on the sequence hopping and/or sequence group hopping/shifting and/or cyclic time shift hopping/remapping and/or orthogonal cover code. In other words, the configuration on sequence hopping, sequence group hopping/shifting, cyclic time shift hopping/remapping and/or orthogonal cover code can be dynamically changed by network (e.g. through configuration by RRC signaling or PDCCH signaling).

Furthermore, the PDCCH signaling dynamically changes at least one of sequence shift offset, hopping pattern, PUCCH resource index and cyclic time shift offset.

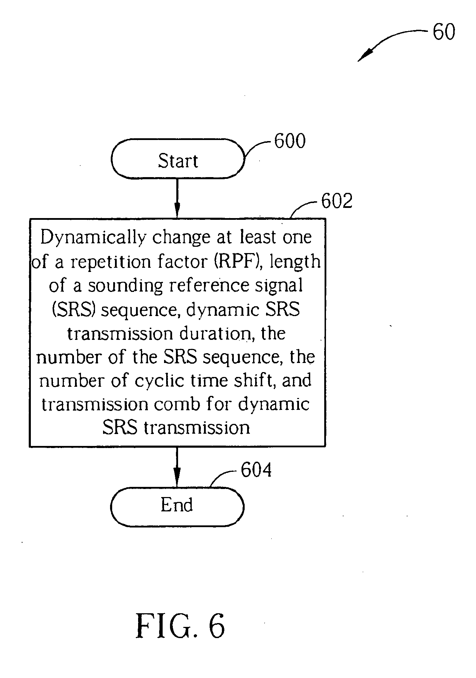

Please refer to FIG.6, which is a flow chart of an exemplary process 60. The process 60 is used for enhancing downlink transmission for a network in a wireless communication system. The wireless communication system could be the wireless communication system 10. The process 60 can be compiled into the program code 214 and includes the following steps:

Step 600: Start.

Step 602: Dynamically change at least one of a repetition factor (RPF), length of a sounding reference signal (SRS) sequence, dynamic SRS transmission duration, the number of the SRS sequence, the number of cyclic time shift, and transmission comb for dynamic SRS transmission.

Step 604: End.

According to the process 60, the network dynamically changes at least one of a repetition factor (RPF), length of a sounding reference signal (SRS) sequence, dynamic SRS transmission duration, the number of the SRS sequence, the number of cyclic time shift, and transmission comb for dynamic SRS transmission. Preferably, the RFR is greater than two. The transmission comb provides another means to multiplex UE reference signals in addition to the cyclic time shift. The dynamic SRS transmission may be aperiodic and scheduled for the UE. For dynamic aperiodic SRS, the network can dynamically and easily adjust UE load on transmitting SRS. Therefore, the length of SRS sequence and number of available SRS sequence in a subframe becomes less restricted (more comb and higher RPF). With higher RPF (e.g. odd number such as 3), SRS RBs could be odd number so as to affect the SRS sequence length.

Therefore, use of a larger RPF could provide more flexibility in how the bandwidth could be allocated between UEs. For example, in HetNet deployment, such flexibility becomes important to randomize possible interference since scheduling coordination among cells in HetNet is relatively difficult.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processing means 200 processes the program code 214 related to the abovementioned processes and the processed results can enhance uplink transmission in the wireless communications system 10.

To sum up, the UE applies more hopping/shifting patterns to a spread spectrum technology for the uplink transmission. And the network dynamic change configuration on sequence hopping, sequence hopping/shifting, cyclic time shift hopping/remapping and/or orthogonal cover code. In addition, the network uses a larger RFR to provide more flexibility for bandwidth allocation between UEs.

Those skilled in the art will readily observe that numerous modifications and alterations of the device and method may be made within the scope of the appended claims.

## Claims

1. A method of enhancing uplink transmission or signaling for a mobile device (20) in a wireless communication system (10), the method comprising:
receiving a signaling or configuration message of at least one spectrum technology utilized for corresponding uplink transmission or signaling (402); and
applying each of the at least one spectrum technology for each corresponding uplink transmission or signaling according to the signaling or the configuration message (404);
wherein the signaling or the configuration message comprises at least one of a cell broadcast signaling and a radio resource control, RRC, signaling; and
wherein at least one of the spectrum technology of said receiving step and the spectrum technology of said applying step comprises sequence group hopping; and
wherein the sequence group hopping, used by the mobile device, corresponds to sequence group hopping patterns, which are generated by a pseudo random sequence generator, and the number of the generated sequence group hopping patterns is greater than seventeen.

2. The method of claim 1, wherein when the spectrum technology of said receiving step comprises sequence group hopping, the spectrum technology of said applying step comprises at least one of sequence hopping, sequence group hopping, sequence group shifting, cyclic time shift hopping and cyclic time shift remapping.

3. The method of claim 1, wherein when the spectrum technology of said applying step comprises sequence group hopping, the spectrum technology of said receiving step comprises at least one of sequence hopping, sequence group hopping, sequence group shifting, cyclic time shift hopping and cyclic time shift remapping.

4. The method of any of the preceding claims , wherein the corresponding uplink transmission or signaling comprises physical uplink shared channel, PUSCH, transmission, physical uplink control channel, PUCCH, transmission or reference signal transmission.

5. A method of enhancing uplink transmission for a plurality of base stations forming a network in a wireless communication system (10), the method comprising:
sending a signaling or a configuration message to a mobile device (20) to dynamically or semi-statically change a configuration of the mobile device (20) for uplink transmission or signaling by the mobile device (20) (502);
wherein at least one of the configuration for the uplink transmission or signaling by the mobile device (20) and configuration for each of the uplink transmission or signaling comprises sequence group hopping;
wherein the signaling or the configuration message comprises at least one of a cell broadcast signaling and a radio resource control, RRC, signaling; and
wherein the sequence group hopping, used by the mobile device, corresponds to sequence group hopping patterns, which are generated by a pseudo random sequence generator, and the number of the generated sequence group hopping patterns is greater than seventeen.

6. The method of claim 5, wherein when the configuration for the uplink transmission or signaling by the mobile device (20) comprises sequence group hopping, configuration for each of the uplink transmission or signaling comprises at least one of sequence hopping, sequence group hopping, sequence group shifting, cyclic time shift hopping and cyclic time shift remapping.

7. The method of claim 5, wherein when configuration for each of the uplink transmission or signaling comprises sequence group hopping, the configuration for the uplink transmission or signaling by the mobile device (20) comprises at least one of sequence hopping, sequence group hopping, sequence group shifting, cyclic time shift hopping and cyclic time shift remapping.

8. A communication device enhancing uplink transmission for a network in a wireless communication system (10), the communication device comprising:
means for sending a signaling or a configuration message to a mobile device (20) to dynamically or semi-statically change a configuration of the mobile device for uplink transmission or signaling by the mobile device (20);
wherein at least one of the configuration for the uplink transmission or signaling by the mobile device (20) and configuration for each of the uplink transmission or signaling comprises sequence group hopping;
wherein the signaling or the configuration message comprises at least one of a cell broadcast signaling and a radio resource control, RRC, signaling; and
wherein the sequence group hopping, used by the mobile device, corresponds to sequence group hopping patterns, which are generated by a pseudo random sequence generator and the number of the generated sequence group hopping patterns is greater than seventeen.

9. The communication device of claim 8, wherein when the configuration for the uplink transmission or signaling by the mobile device (20) comprises sequence group hopping, configuration for each of the uplink transmission or signaling comprises at least one of sequence hopping, sequence group hopping, sequence group shifting, cyclic time shift hopping and cyclic time shift remapping.

10. The communication device of claim 8, wherein when configuration for each of the uplink transmission or signaling comprises sequence group hopping, the configuration for the uplink transmission or signaling by the mobile device (20) comprises at least one of sequence hopping, sequence group hopping, sequence group shifting, cyclic time shift hopping and cyclic time shift remapping.

## Patentansprüche

1. Ein Verfahren zum Verbessern von Uplink Übertragung oder Signalisierung für ein mobiles Gerät (20) in einem drahtlosen Kommunikationssystem (10), wobei das Verfahren Folgendes aufweist:
Empfangen einer Signalisierung oder Konfigurationsnachricht mit mindestens einer Spektumtechnologie, die für entsprechende Uplink Übertragung, auch Aufwärtsverbindungsübertragung, oder Signalisierung verwendet wird (402); und
Anwenden jeder der mindestens einen Spektrumtechnologie für jede entsprechende Uplink Übertragung oder Signalisierung gemäß der Signalisierung oder der Konfigurationsnachricht (404);
wobei die Signalisierung oder die Konfigurationsnachricht mindestens eine Zellenrundrufsignalisierung, auch Cell Broadcast Signalling, und/oder eine Funkressourcensteuersignalisierung, auch RRC Signalisierung, RRC = Radio Ressource Control aufweist; und
wobei mindestens eine der Spektumtechnologie des Empfangsschrittes und der Spektumtechnologie des Anwendungsschrittes Sequenzgruppenspringen, auch Sequenz Group Hopping, aufweist; und
wobei das Sequenzgruppenspringen, das von dem mobilen Gerät genutzt wird, Sequenzgruppensprungmustern, auch Sequenz Group Hopping Pattern, entspricht, die durch einen Pseudozufallssequenzgenerator generiert wurden, und wobei die Anzahl der generierten Sequenzgruppensprungmuster größer als 17 ist.

2. Verfahren nach Anspruch 1, wobei wenn die Spektumtechnologie des Schrittes des Empfangens Sequenzgruppenspringen aufweist, die Spektumtechnologie des Schrittes des Anwendens mindestens eines der Folgenden aufweist: Sequenzspringen, auch Sequence Hopping, Sequenzgruppenspringen, Sequenzgruppenverschieben, auch Sequence Group Shifting, zyklischen Zeitverschiebungsspringen, auch Cyclic Time Shift Hopping, und zyklische Zeitverschiebungsneuzuweisen, auch Cyclic Time Shift Remapping.

3. Verfahren nach Anspruch 1, wobei wenn die Spektumtechnologie des Schrittes des Anwendens Sequenzgruppenspringen aufweist, die Spektumtechnologie des Schrittes des Empfangens mindestens eines der Folgenden aufweist: Sequenzspringen, Sequenzgruppenspringen, Sequenzgruppenverschieben, zyklischen Zeitverschiebungsspringen, und zyklische Zeitverschiebungsneuzuweisen.

4. Verfahren nach einem der vorhergehenden Ansprüche, wobei die entsprechende Uplink Übertragung oder Signalisierung Physical Uplink Shared Channel Übertragung, auch PUSCH Übertragung, Physical'Uplink Control Channel Übertragung, auch PUCCH Übertragung, oder Referenzsignalübertragung aufweist.

5. Ein Verfahren zum Verbessern von Uplink Übertragung für eine Vielzahl von Basisstationen, die ein Netzwerk in einem drahtlosen Kommunikationssystem (10) bilden, wobei das Verfahren Folgendes aufweist:
Senden einer Signalisierung oder Konfigurationsnachricht an ein mobiles Gerät (20) zum dynamischen oder halbstatischen, auch semi-static, Ändern einer Konfiguration des mobilen Gerätes (20), und zwar für Uplink Übertragung oder Signalisierung durch das mobile Gerät (20) (502);
wobei mindestens eine der Konfiguration für die Uplink Übertragung oder Signalisierung durch das mobile Gerät (20) und Konfiguration für jede der Uplink Übertragung oder Signalisierung Sequenzgruppenspringen, auch Sequenz Group Hopping, aufweist;
wobei die Signalisierung oder die Konfigurationsnachricht mindestens eine Zellrundrufsignalisierung, auch Cell Broadcast Signalling, und/oder eine Funkressourcensteuersignalisierung, auch RRC Signalisierung, RRC = Radio Ressource Control aufweist; und
wobei das Sequenzgruppenspringen, das durch das mobile Gerät genutzt wird, Sequenzgruppensprungmustern entspricht, die durch einen Pseudozufallssequenzgenerator generiert wurden, und wobei die Anzahl der generierten Sequenzgruppensprungmuster größer als 17 ist.

6. Verfahren nach Anspruch 5, wobei wenn die Konfiguration für die Uplink Übertragung oder Signalisierung durch das mobile Gerät (20) Sequenzgruppenspringen aufweist, Konfiguration für jede der Uplink Übertragung oder Signalisierung mindestens eines der Folgenden aufweist: Sequenzspringen, auch Sequenz Hopping, Sequenzgruppenspringen, Sequenzgruppenverschieben, auch Sequenz Group Shifting, zyklischen Zeitverschiebungsspringen, auch Cyclic Time Shift Hopping, und zyklische Zeitverschiebungsneuzuweisen, auch Cyclic Time Shift Remapping.

7. Verfahren nach Anspruch 5, wobei wenn die Konfiguration für jede der Uplink Übertragung oder Signalisierung Sequenzgruppenspringen aufweist, die Konfiguration für die Uplink Übertragung oder Signalisierung durch das mobile Gerät (20) mindestens eines der Folgenden aufweist: Sequenzspringen, Sequenzgruppenspringen, Sequenzgruppenverschieben, zyklischen Zeitverschiebungsspringen, und zyklische Zeitverschiebungsneuzuweisen.

8. Ein Kommunikationsgerät zum Verbessern von Uplink Übertragung für ein Netzwerk in einem drahtlosen Kommunikationssystem (10), wobei das Kommunikationsgerät Folgendes aufweist:
Mittel zum Senden einer Signalisierung oder Konfigurationsnachricht zu einem mobilen Gerät (20) zum dynamischen oder halbstatischen, auch semi-static, Ändern einer Konfiguration des mobilen Gerätes für Uplink Übertragung oder Signalisierung durch das mobile Gerät (20);
wobei mindestens eine der Konfiguration für Uplink Übertragung oder Signalisierung durch das mobile Gerät (20) und Konfiguration für jede der Uplink Übertragung oder Signalisierung Sequenzgruppenspringen, auch Sequenz Group Hopping, aufweist;
wobei die Signalisierung oder die Konfigurationsnachricht mindestens eine Zellenrundrufsignalisierung, auch Cell Broadcast Signalling, und/oder eine Funkressourcensteuersignalisierung, auch RRC Signalisierung, RRC = Radio Ressource Control aufweist; und
wobei das Sequenzgruppenspringen, das durch das mobile Gerät genutzt wird, Sequenzgruppensprungmustern entspricht, die durch einen Pseudozufallssequenzgenerator generiert wurden und wobei die Anzahl der generierten Sequenzgruppensprungmuster größer als 17 ist.

9. Kommunikationsgerät nach Anspruch 8, wobei wenn die Konfiguration für die Uplink Übertragung oder Signalisierung durch das mobile Gerät (20) Sequenzgruppenspringen aufweist, Konfiguration für jede der Uplink Übertragung oder Signalisierung mindestens eines der Folgenden aufweist: Sequenzspringen, auch Sequenz Hopping, Sequenzgruppenspringen, Sequenzgruppenverschieben, auch Sequenz Group Shifting, zyklischen Zeitverschiebungsspringen, auch Cyclic Time Shift Hopping, und zyklische Zeitverschiebungsneuzuweisen, auch Cyclic Time Shift Remapping.

10. Kommunikationsgerät nach Anspruch 8, wobei wenn die Konfiguration für jede der Uplink Übertragung oder Signalisierung Sequenzgruppenspringen aufweist, die Konfiguration der Uplink Übertragung oder Signalisierung durch das mobile Gerät (20) mindestens eines der Folgenden aufweist: Sequenzspringen, Sequenzgruppenspringen, Sequenzgruppenverschieben, zyklischen Zeitverschiebungsspringen, und zyklische Zeitverschiebungsneuzuweisen.

## Revendications

1. Procédé pour améliorer la transmission ou la signalisation en liaison montante pour un dispositif mobile (20) dans un système de communication sans fil (10), le procédé comprenant :
recevoir un message de signalisation ou de configuration d'au moins une technologie spectrale utilisée pour une transmission ou une signalisation en liaison montante correspondante (402) ; et
appliquer chacune desdites au moins une technologie spectrale pour chaque transmission ou signalisation de liaison montante correspondante conformément au message de signalisation ou de configuration (404) ;
dans lequel le message de signalisation ou de configuration comprend au moins l'une d'une signalisation de cellule en diffusion et d'une signalisation de contrôle de ressources radio, RRC ; et
dans lequel au moins l'une de la technologie spectrale de l'étape de réception et de la technologie spectrale de l'étape d'application comprend des sauts de groupes de séquences ; et
dans lequel les sauts de groupes de séquences, utilisés par le dispositif mobile, correspondent à des motifs de sauts de groupe de séquences qui sont générés par un générateur de séquences pseudo-aléatoires, et le nombre de motifs de sauts de groupes de séquences générés est supérieur à dix-sept.

2. Procédé selon la revendication 1, dans lequel lorsque la technologie spectrale de l'étape de réception comprend des sauts de groupes de séquences, la technologie spectrale de l'étape d'application comprend au moins un élément parmi des sauts de séquences, des sauts de groupes de séquences, des décalages de groupes de séquences, des sauts de décalages temporels cycliques et des remappages de décalages temporels cycliques.

3. Procédé selon la revendication 1, dans lequel lorsque la technologie spectrale de l'étape d'application comprend des sauts de groupes de séquences, la technologie spectrale de l'étape de réception comprend au moins un élément parmi des sauts de séquences, des sauts de groupes de séquences, des décalages de groupes de séquences, des sauts de décalages temporels cycliques et des remappages de décalages temporels cycliques.

4. Procédé selon l'une quelconque des revendications précédentes, dans lequel la transmission ou la signalisation en liaison montante correspondante comprend une transmission de canal partagé montant physique, PUSCH, une transmission de canal de commande montant physique, PUCCH, ou une transmission de signaux de référence.

5. Procédé pour améliorer des transmissions en liaison montante pour une pluralité de stations de base formant un réseau dans un système de communication sans fil (10), le procédé comprenant :
envoyer un message de signalisation ou de configuration à un dispositif mobile (20) pour changer de façon dynamique ou semi-statique la configuration du dispositif mobile (20) pour une transmission ou une signalisation en liaison montante par le dispositif mobile (20) (502) ;
dans lequel au moins l'une de la configuration pour la transmission ou la signalisation en liaison montante par le dispositif mobile (20) et de la configuration pour chacune de la transmission ou de la signalisation en liaison montante comprend des sauts de groupes de séquences ;
dans lequel le message de signalisation ou de configuration comprend au moins l'une d'une signalisation de cellule en diffusion et d'une signalisation de contrôle de ressources radio, RRC ; et
dans lequel les sauts de groupes de séquences, utilisés par le dispositif mobile, correspondent à des motifs de sauts de groupes de séquences qui sont générés par un générateur de séquences pseudo-aléatoires, et le nombre de motifs de sauts de groupes de séquences est supérieur à dix-sept.

6. Procédé selon la revendication 5, dans lequel lorsque la configuration pour la transmission ou la signalisation en liaison montante par le dispositif mobile (20) comprend des sauts de groupes de séquences, la configuration pour chacune de la transmission ou de la signalisation en liaison montante comprend au moins un élément parmi des sauts de séquences, des sauts de groupes de séquences, des décalages de groupes de séquences, des sauts de décalages temporels cycliques et des remappages de décalages temporels cycliques.

7. Procédé selon la revendication 5, dans lequel lorsque la configuration pour chacune de la transmission ou de la signalisation en liaison montante comprend des sauts de groupes de séquences, la configuration pour la transmission ou la signalisation en liaison montante par le dispositif mobile (20) comprend au moins un élément parmi des sauts de séquences, des sauts de groupes de séquences, des décalages de groupes de séquences, des sauts de décalages temporels cycliques et des remappages de décalages temporels cycliques.

8. Dispositif de communication pour améliorer des transmissions en liaison montante pour un réseau dans un système de communication sans fil (10), le dispositif de communication comprenant :
des moyens pour envoyer un message de signalisation ou de configuration à un dispositif mobile (20) pour changer de façon dynamique ou semi-statique la configuration du dispositif mobile pour une transmission ou une signalisation en liaison montante par le dispositif mobile (20) ;
dans lequel au moins l'une de la configuration pour la transmission ou la signalisation en liaison montante par le dispositif mobile (20) et de la configuration pour chacune de la transmission ou de la signalisation en liaison montante comprend des sauts de groupes de séquences ;
dans lequel le message de signalisation ou de configuration comprend au moins l'une d'une signalisation de cellule en diffusion et d'une signalisation de contrôle de ressources radio, RRC ; et
dans lequel les sauts de groupes de séquences, utilisés par le dispositif mobile, correspondent à des motifs de sauts de groupes de séquences qui sont générés par un générateur de séquences pseudo-aléatoires, et le nombre de motifs de sauts de groupes de séquences est supérieur à dix-sept.

9. Dispositif de communication selon la revendication 8, dans lequel lorsque la configuration pour la transmission ou la signalisation en liaison montante par le dispositif mobile (20) comprend des sauts de groupes de séquences, la configuration pour chacune de la transmission ou de la signalisation en liaison montante comprend au moins un élément parmi des sauts de séquences, des sauts de groupes de séquences, des décalages de groupes de séquences, des sauts de décalages temporels cycliques et des remappages de décalages temporels cycliques.

10. Dispositif de communication selon la revendication 8, dans lequel lorsque la configuration pour chacune de la transmission ou de la signalisation en liaison montante comprend des sauts de groupe de séquences, la configuration pour la transmission ou la signalisation en liaison montante par le dispositif mobile (20) comprend au moins un élément parmi des sauts de séquences, des sauts de groupes de séquences, des décalages de groupes de séquences, des sauts de décalages temporels cycliques et des remappages de décalages temporels cycliques.
